# EUROPÄISCHE PATENTSCHRIFT

(11) **EP 2 456 637 B1**
(45) Veröffentlichungstag und Bekanntmachung des Hinweises auf die Patenterteilung: **14.09.2016**
(21) Anmeldenummer: 10734685.0
(22) Anmeldetag: 13.07.2010
(51) Int. Cl.: B60L 11/18, H01M 2/10

(54) **WECHSELAKKU-KREISLAUF-SYSTEM FÜR ELEKTRO-KRAFTFAHRZEUGE**
REPLACABLE BATTERY CIRCULATION SYSTEM FOR ELECTRIC VEHICLES
SYSTÈME DE CIRCULATION D'ACCUMULATEURS INTERCHANGEABLES POUR VÉHICULES À MOTEUR ÉLECTRIQUE

(30) Priorität: 24.07.2009 DE 102009034698
(43) Veröffentlichungstag der Anmeldung: 30.05.2012
(73) Patentinhaber: Sanli, Ismail, 65510 Idstein (DE)
(72) Erfinder: Sanli, Ismail, 65510 Idstein (DE)
(74) Vertreter: Mergel, Volker
(86) Internationale Anmeldenummer: PCT/EP2010/004244
(87) Internationale Veröffentlichungsnummer: WO 2011/009543

(56) Entgegenhaltungen:
- EP-A2- 1 547 852
- WO-A1-2008/123543
- US-A1- 2003 209 375
- US-A1- 2009 058 355

## Beschreibung

### Gebiet der Erfindung

Die Erfindung betrifft ein Wechselakku-Kreislauf-System zum Betanken von Kraftfahrzeugen mit Elektroantrieb und Elektro-Kraftfahrzeugen zum Betrieb in diesem System.

### Hintergrund der Erfindung

Die Automobil- und Energieindustrie hat sich kürzlich auf einen genormten Stromstecker für Elektroautos geeinigt (vgl. Frankfurter Rundschau vom 21.4.2009). Nachteiligerweise verbleibt bei einem Elektrokraftfahrzeug aber das Problem, dass das Aufladen der Akkus typischerweise zwischen zwei und acht Stunden dauert. Dadurch sind derartige Elektrokraftfahrzeuge letztlich für den Langstreckenbetrieb ungeeignet. Selbst wenn die Ladezeit durch verbesserte Akkutechnologien verkürzt werden kann, verbleibt das Problem dem Grunde nach.

Aus der US 2003/0209375 A1 ist ein Energieversorgungssystem für ein Elektrofahrzeug bekannt, welches entfernbar in einem Fahrzeug installiert ist. Hierfür wird eine Mehrzahl von kassettenartigen Batterien verwendet.

US 2009/0058355 beschreibt ein Batterie-Modul und Ersatz-System für elektrische Fahrzeuge, bei welchem die Batterie mit einer Art Hebebühne von unten in das Fahrzeug eingesetzt wird.

Gemäß der WO 2008/123543 werden die Speicherbatterien unter den Fahrzeugsitzen eingesetzt.

Die EP 1 547 852 A2 beschreibt einen dreirädrigen Scooter, bei welchem zwei Energieversorgungseinheiten unter dem Sitz positioniert sind.

Bei herkömmlichen Elektrokraftfahrzeugen ist allerdings noch immer ein teurer und aufwändiger Akkuaustausch in der Werkstatt notwenig, wenn die Akkus nach einer bestimmten Anzahl von Ladezyklen das Ende ihrer Lebensdauer erreicht haben und der Wirkungsgrad nachlässt. Nachteilig ist auch, dass hierbei unter Umständen Akkuzellen ausgetauscht werden, die ggf. noch einige weitere Ladezyklen arbeiten könnten, wenn der Gesamtakku an Wirkungsgrad verliert.

### Allgemeine Beschreibung der Erfindung

Die Erfindung hat sich daher die Aufgabe gestellt, ein Betankungssystem für Kraftfahrzeuge mit Elektroantrieb und derartige Kraftfahrzeuge bereit zu stellen, welche ein schnelles und rechtzeitiges Betanken ermöglichen.

Eine weitere Aufgabe der Erfindung ist es, ein derartiges Betankungssystem bereit zu stellen, welches für den Nutzer einfach und komfortabel zu bedienen ist.

Noch eine Aufgabe der Erfindung ist es ein derartiges Betankungssystem bereit zu stellen, welches Kosten- und Ressourcen-effizient ist.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein Kraftfahrzeug mit Elektroantrieb vorgeschlagen, welches mit einem Wechsel-Akkumodul-System arbeitet. Das Kraftfahrzeug umfasst einen elektrischen Antriebsmotor und einen Energiespeicher in Form einer wiederaufladbaren Batterieanordnung mit grundsätzlich bekannten Akkuzellentypen. Geeignet sind z.B. Nickel-Metallhydrid, Lithium-Ionen oder Lithium-Polymer-Akkuzellen, andere Akkuzellentypen sind jedoch ebenfalls einsetzbar, sofern sie ein hinreichend niedriges Leistungsgewicht aufweisen. Die Batterieanordnung besteht erfindungsgemäß nicht aus einem fest in das Kraftfahrzeug eingebauten Akkublock, sondern umfasst eine Mehrzahl von separaten Wechsel-Akkumodulen, die einzeln vom Nutzer selbst ausgetauscht werden können, wenn sie entladen sind.

Hierzu weist die Batterieanordnung eine Mehrzahl von Aufnahmeeinrichtungen für die Wechsel-Akkumodule auf, so dass die in der Batterieeinrichtung gespeicherte Energiemenge in mehrere Energieportionen, die jeweils einem Wechsel-Akkumodul entsprechen, aufgeteilt ist. Hierdurch kann eine portionsweise Betankung des elektrischen Energiespeichers durch Austausch einzelner (eines einzigen oder mehrerer) Wechsel-Akkumodule erfolgen, was erheblich schneller vorgenommen werden kann, als ein Aufladen eines fest eingebauten Akkublocks.

Die Batterieanordnung weist eine Mehrzahl von Aufnahmeeinrichtungen auf, in die jeweils ein Wechsel-Akkumodul einsetzbar ist. Die Wechsel-Akkumodule besitzen hierfür jeweils ein in die Aufnahmeeinrichtung passendes eigenes Gehäuse, um sie als separat handhabbare Einheiten auszubilden. In dem Gehäuse jedes Wechsel-Akkumoduls sind eine Mehrzahl von Akkuzellen beherbergt und zusammengeschaltet. Das Kraftfahrzeug weist eine Einsetz- und Entnahmeöffnung für die Wechsel-Akkumodule auf, durch welche die Wechsel-Akkumodule jeweils einzeln in eine der Aufnahmeeinrichtungen eingesetzt werden bzw. aus der Aufnahmeeinrichtung entnommen werden, wobei die Wechsel-Akkumodule und die Aufnahmeeinrichtungen jeweils zueinander komplementäre elektrische Verbinder besitzen. Der Austausch der Wechsel-Akkumodule kann manuell vom Nutzer, z.B. mittels eines Handgriffs an jedem Wechsel-Akkumodul vorgenommen werden, kann aber auch maschinell, z.B. roboterbasiert durchgeführt werden. Die Einsetz- und Entnahmeöffnung wird vorzugsweise mit einem Deckel verschlossen. Die Wechsel-Akkumodule und die Aufnahmeeinrichtungen der Batterieanordnung sind jeweils gleichartig ausgebildet, so dass die Wechsel-Akkumodule jeweils in eine beliebige der Aufnahmeeinrichtungen eingesetzt werden können. Dadurch entsteht eine beliebige Austauschbarkeit der genormten Wechsel-Akkumodule sowohl zwischen den Kraftfahrzeugen als auch innerhalb der Kraftfahrzeuge, nämlich zwischen den Aufnahmeeinrichtungen.

Vorteilhafterweise, können mit der Erfindung lange Aufladezeiten vermieden werden, in denen das Kraftfahrzeug nicht gefahren werden kann. Das Austauschen der Wechsel-Akkumodule kann erheblich schneller durchgeführt werden, als das Aufladen eines fest eingebauten Akkublocks. Dadurch wird eine vergleichbare Mobilität des Elektro-Kraftfahrzeugs wie bei herkömmlichen Verbrennungsmotorangetriebenen Kraftfahrzeugen auch im Langstreckenbetrieb erreicht. Ferner wird ein aufwändiger Austausch eines fest eingebauten Akkublocks nach Erreichen der maximalen Anzahl von Ladezyklen vermieden.

Das Kraftfahrzeug besitzt ferner eine Steuereinrichtung, das sogenannte Energiekontrollsystem. Diese Steuereinrichtung steuert beim Fahren die Energieentnahme aus den Wechsel-Akkumodulen selektiv, derart dass die Wechsel-Akkumodule einzeln oder gruppenweise sukzessive entladen werden. Mit anderen Worten werden nicht alle Wechsel-Akkumodule gleichzeitig entladen, sondern einzeln oder gruppenweise. Dadurch wird beispielsweise erreicht, dass bei Entladung um die Hälfte nicht alle Wechsel-Akkumodule um die Hälfte entladen sind, sondern z.B. ist die Hälfte der Wechsel-Akkumodule vollständig entladen und die andere Hälfte der Wechsel-Akkumodule ist noch vollständig geladen. Dies ermöglicht den selektiv einzelnen oder gruppenweisen Austausch der vollständig entladenen Wechsel-Akkumodule, wobei die noch geladenen Wechsel-Akkumodule beim Betanken im Kraftfahrzeug verbleiben können. Dadurch werden auch die Ladezyklen optimiert und die Lebensdauer der Akkuzellen erhöht sowie die Menge an auszutauschenden Wechsel-Akkumodule auf ein Minimum reduziert, so dass der Betankungsvorgang beschleunigt und erleichtert wird. Somit wird erfindungsgemäß ein modulares Wechsel-Akkusystem in dem Kraftfahrzeug gebildet, bei welchem nur die entladenen Wechsel-Akkumodule selektiv ausgetauscht zu werden brauchen. Der Austausch erfolgt demnach selektiv in Abhängigkeit vom Ladungszustand des jeweiligen Wechsel-Akkumoduls.

Im Kraftfahrzeugcockpit, vorzugsweise im Armaturenbrett befindet sich eine Ladungszustandsanzeige, ähnlich einer Tankanzeige eines Verbrennungsmotor-getriebenen Kraftfahrzeugs. Diese Ladungszustandsanzeige zeigt den jeweiligen momentanen Ist-Ladungszustand der Wechsel-Akkumodule einzeln oder gruppenweise an, so dass der Fahrer nicht nur Kenntnis über die Gesamtrestenergie der Batterieanordnung, sondern auch über den differentiellen Ladungszustand der Wechsel-Akkumodule hat. Dies ist für den Fahrer für die Entscheidung hilfreich, wann er zum Tanken fährt. Zweckmäßig zeigt die Ladungszustandsanzeige nicht nur den montanen Ist-Ladungszustand, sondern auch den maximalen Ladungszustand an, z.B. über ein Füllstands-Balkendiagramm. Z.B. enthält die Ladungszustandanzeige für die Wechsel-Akkumodule jeweils einzeln oder gruppenweise einen Leuchtbalken, wobei die Länge des beleuchteten Teils oder einer bestimmten Leuchtfarbe des Leuchtbalkens zu dem Ladungszustand des zugehörigen Wechsel-Akkumoduls oder der zugehörigen Gruppe von Wechsel-Akkumodulen korrespondiert.

Gemäß einer bevorzugten Ausführungsform der Erfindung wird einem oder einer Gruppe der Wechsel-Akkumodule, zweckmäßig etwa zwischen 5% und 20% der Wechsel-Akkumodule ein Reserve-Status zugewiesen. Die Steuereinrichtung steuert nun die Energieentnahme aus den Wechsel-Akkumodulen derart, dass die Wechsel-Akkumodule mit dem Reserve-Status erst dann entladen werden, wenn die übrigen Wechsel-Akkumodule bereits vollständig entladen sind. Wenn die Entladung soweit fortgeschritten ist erhält der Fahrer eine Reserve-Warnmeldung, ähnlich wie bei einem Verbrennungsmotor-getriebenen Kraftfahrzeug, so dass der Fahrer rechtzeitig die nächste Elektro-Tankstelle ansteuern kann, bevor alle Wechsel-Akkumodule entladen sind und das Kraftfahrzeug liegen bleibt. Vorzugsweise sind ein oder mehrere vorbestimmte Leuchtbalken den Wechsel-Akkumodulen mit dem Reserve-Status zugeordnet, diese können zur optischen Verdeutlichung eine besondere Farbe, z.B. rot oder orange, haben.

Der Reserve-Status wird ggf. regelmäßig, vorzugsweise nach dem Tanken, von der Steuereinrichtung automatisch neu, also anderen Aufnahmeeinrichtungen zugewiesen. Dadurch wird der Selbstentladung der Reserve-Wechsel-Akkumodule entgegengewirkt.

Ferner ist vorteilhaft, wenn jeder Leuchtbalken zusätzlich anzeigt, welche Wechsel-Akkumodule oder Gruppen von Wechsel-Akkumodulen gerade momentan entladen werden, z.B. durch Änderung der Farbe. Aus dieser Anzeige kann der Fahrer weitere Schlüsse in Bezug auf Fahrverhalten, Verbrauch und nächsten Tankstopp ziehen.

Vorzugsweise umfassen die Wechsel-Akkumodule jeweils einen Datenspeicher, auf welchem die Anzahl der Ladezyklen gespeichert ist. Dies ermöglicht Rückschlüsse auf die verbleibende Lebensdauer jedes einzelnen Wechsel-Akkumoduls, so dass diese selektiv aus dem Kreislauf gezogen werden können, wenn die maximale Lebensdauer erreicht ist. Vorzugsweise wird dies automatisch von den Ladeautomaten bewirkt, welche den Datenspeicher bei jedem Ladezyklus auslesen.

Die Steuereinrichtung steuert vorzugsweise in Ansprechen auf die Leistungsanforderung durch den Elektromotor die Anzahl der momentan zu entladenden Wechsel-Akkumodule oder Gruppen von Wechsel-Akkumodulen. Z.B. wird bei gleichmäßiger Fahrt nur eines von zehn Wechsel-Akkumodulen entladen, während beim Beschleunigen zwei oder mehrere, im Extremfall alle bis auf die Reserve-Wechsel-Akkumodule entladen werden. Hierdurch wird ein guter Kompromiss zwischen Flexibilität an die momentane Leistungsanforderung und die Ressourcen-Effizienz erreicht.

Vorzugsweise weisen die Wechsel-Akkumodule oder die Aufnahmeeinrichtungen jeweils zusätzlich zu der Anzeigeeinrichtung im Armaturenbrett noch eine eigene Ladungszustandsanzeige auf, welche unmittelbar an dem jeweiligen Wechsel-Akkumodul bzw. der jeweiligen Aufnahmeeinrichtung ablesbar ist. Dies kann z.B. mit Leuchtdioden realisiert, grün für "nicht vollständig entladen", rot für "vollständig entladen". Dadurch kann der Nutzer beim manuellen Betanken direkt am Wechsel-Akkumodul sehen, welche Wechsel-Akkumodule auszutauschen sind.

Zweckmäßig weisen die Wechsel-Akkumodule und die Aufnahmeeinrichtungen jeweils zueinander komplementäre Rasteinrichtungen auf, damit die Wechsel-Akkumodule sicher in den Aufnahmeeinrichtungen im Kraftfahrzeug festgelegt sind. Die Wechsel-Akkumodule oder die Aufnahmeeinrichtungen können eine Anzeigeeinrichtung aufweisen, welche anzeigt, ob das jeweilige Wechsel-Akkumodul korrekt in der Aufnahmeeinrichtung eingerastet ist, z.B. eine weitere Leuchtdiode.

Um ein manuelles Austauschen der Wechsel-Akkumodule zu ermöglichen, umfassen diese vorzugsweise jeweils einen Handgriff. Es ist ferner vorteilhaft eine Auslöseeinrichtung zum Lösen der Rasteinrichtung unmittelbar an dem Handgriff des jeweiligen Wechsel-Akkumoduls anzuordnen, so dass die Wechsel-Akkumodule mit einer Hand entrastbar und aus der Aufnahmeeinrichtung herausziehbar sind. Dadurch kann Nutzer einfach zwei Wechsel-Akkumodule gleichzeitig austauschen.

Bevorzugt weist das Gehäuse der Wechsel-Akkumodule eine länglich zylindrische Form auf und die Aufnahmeeinrichtung besitzt eine längliche hülsenförmige Fassung, in welche jeweils eines der länglich zylindrischen Gehäuse linear einschiebbar ist. Wenn die hülsenförmige Fassung einen runden inneren Querschnitt und einen eckigen äußeren Querschnitt aufweist, lässt sich das Gehäuse des Wechsel-Akkumoduls leicht einsetzen und die Aufnahmehülsen können platzsparend und stabil im Kraftfahrzeug montiert werden.

Eine gute Kontaktsicherheit wird erreicht, wenn die elektrischen Verbinder als Steckverbinder ausgebildet und jeweils an der Stirnseite der länglich zylindrischen Gehäuse und der hülsenförmigen Fassungen positioniert sind.

Zum Betreiben eines solchen Wechselakku-Kreislauf-Systems zum Betanken der Elektro-Kraftfahrzeuge wird weiter ein Netz aus einer Vielzahl von elektrischen Tankstellen aufgebaut. Die Tankstellen weisen jeweils zumindest einen elektrischen Ladeautomaten für die Wechsel-Akkumodule auf. Wenn der Nutzer zum Tanken an die Tankstelle fährt, hält er an einem der Ladeautomaten, entnimmt die vollständig entladenen Wechsel-Akkumodule aus dem Kraftfahrzeug und führt sie in den Ladeautomaten ein. Ferner bezahlt der Nutzer den Preis für die Energiemenge der auszutauschenden Wechsel-Akkumodule. Anstatt dass der Nutzer abwartet, bis seine Akkus aufgeladen sind, erhält der Nutzer sofort andere aber gleichartige, da genormte, und vollständig geladene Wechsel-Akkumodule, die er in sein Kraftfahrzeug einführt. Für das Aufladen der von diesem Nutzer eingeführten Wechsel-Akkumodule bleibt nun genug Zeit, wenn hinreichend viele Wechsel-Akkumodule in der Tankstelle vorgehalten werden. Wenn ein konkretes Wechsel-Akkumodul das Ende seiner Lebensdauer erreicht hat, wird es vorzugsweise von dem Ladeautomaten automatisch aus dem Kreislauf entfernt und vom Betreiber ersetzt. Der Nutzer erhält ein anderes noch nutzbares Wechsel-Akkumodul. Das Wechselakku-Kreislauf-System arbeitet also ähnlich einem Pfandsystem, wobei in dem Austausch-Preis an der Ladestation eine pauschale Abnutzungsgebühr für die Wechsel-Akkumodule enthalten sein kann, um dies zu finanzieren. Daher sollte in dem Datenspeicher der Wechsel-Akkumodule ein eindeutiger Identifikator gespeichert sein. So kann mittels eines Datenabgleichs zwischen dem Nutzer, der sich an der Tankstelle identifiziert und den beim letzten Betanken erhaltenen Wechsel-Akkumodulen Missbrauch vermieden werden.

Die Ladeautomaten umfassen jeweils eine Mehrzahl von Aufnahmeeinrichtungen für die Wechsel-Akkumodule, eine Ladeeinrichtung zum Aufladen der Wechsel-Akkumodule und zumindest eine Einsetz- und Entnahmeöffnung für die Wechsel-Akkumodule. Die Wechsel-Akkumodule werden vom Nutzer, insbesondere manuell durch die Einsetz- und Entnahmeöffnung jeweils in eine der Aufnahmeeinrichtungen eingesetzt bzw. aus der Aufnahmeeinrichtung entnommen, wobei die Wechsel-Akkumodule und die Aufnahmeeinrichtungen jeweils zueinander komplementäre elektrische Verbinder besitzen. Die Aufnahmeeinrichtungen des Ladeautomaten sind wie auch im Kraftfahrzeug gleichartig ausgebildet, so dass die genormten Wechsel-Akkumodule jeweils in eine beliebige der Aufnahmeeinrichtungen eingesetzt werden können.

Ferner umfasst der Ladeautomat Mittel die in Ansprechen auf einen Bezahlvorgang und ein Einsetzen eines oder mehrerer entladener Wechsel-Akkumodule in den Ladeautomaten automatisch eine gleiche Anzahl anderer gleichartiger aufgeladener Wechsel-Akkumodule zur Entnahme durch den Nutzer bereit stellen. Z.B. weisen die Ladeautomaten jeweils ein Benutzer-Paneel mit einer Bezahleinrichtung, z.B. für elektronische Bezahlung (EC-Karte, Kreditkarte oder ähnliches) und ein Transport- und Öffnungssystem, welches automatisch aufgeladene Wechsel-Akkumodule an die Einsatz- und Entnahmeöffnungen transportiert und in Ansprechen auf den Bezahlvorgang und das Einsetzen eines oder mehrerer entladener Wechsel-Akkumodule in den Ladeautomaten automatisch gleichzeitig oder nacheinander die gleiche Anzahl von aufgeladenen Wechsel-Akkumodulen zur Entnahme durch den Nutzer an den Entnahmeöffnungen freigibt.

Beispielweise umfasst das Transport- und Öffnungssystem ein Klappensystem und eine Mehrzahl von nebeneinander angeordneten Walzen, welche an der Umfangsseite jeweils eine Mehrzahl von radial verlaufenden Aufnahmehülsen für die Wechsel-Akkumodule aufweisen. Die Walzen sind unabhängig voneinander drehbar und es werden automatisch zum Einschieben der entladenen Wechsel-Akkumodule leere Aufnahmehülsen zu den Einsetz- und Entnahmeöffnungen gedreht und entsprechende Klappen geöffnet damit der Nutzer seine entladenen Wechsel-Akkumodule einschieben kann. Nach dem Bezahlen werden andere Aufnahmehülsen, die mit anderen aufgeladenen Wechsel-Akkumodule bestückt sind zu den Entnahmeeinrichtungen gedreht und entsprechende Klappen geöffnet werden, so dass der Nutzer die aufgeladenen Wechsel-Akkumodule entnehmen kann.

Wenngleich derzeit aufgrund des Gewichts der Akkus mit hinreichender Speicherenergie für ein Elektro-Kraftfahrzeug noch so hoch ist (typischerweise 200 - 500kg), dass ein manuelles Wechsel-Akkusystem gewisse Mühen beim Betanken erfordert, so wird das System mit zunehmender Energiedichte immer interessanter. Allerdings kann das Wechsel-Akkusystem auch soweit automatisiert werden, dass der Austausch der Wechsel-Akkumodule beim Betanken maschinell durchgeführt wird.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine schematische Querschnittsdarstellung des in die Aufnahmevorrichtung eingesetzten Wechsel-Akkumoduls,
- Fig. 2: eine schematische Querschnittsdarstellung des Handgriffs eines Wechsel-Akkumoduls,
- Fig. 3: eine schematische Draufsicht auf den Handgriff des Wechsel-Akkumoduls,
- Fig. 4: eine schematische Darstellung eines erfindungsgemäßen Elektro-Kraftfahrzeugs mit geöffneter Einsetz- und Entnahmeöffnung,
- Fig. 5: ein Blockschaltbild des Steuerungssystems des Kraftfahrzeugs,
- Fig. 6: die Cockpit-Anzeigeeinrichtung für den Ladezustand der Batterieanordnung in einem ersten Entlademodus,
- Fig. 7: die Cockpit-Anzeigeeinrichtung für den Ladezustand der Batterieanordnung in einem zweiten Entlademodus,
- Fig. 8: eine schematische Frontansicht eines Ladeautomaten,
- Fig. 9: eine schematische dreidimensionale Darstellung des Ladeautoamten aus Fig. 8.

### Detaillierte Beschreibung der Erfindung

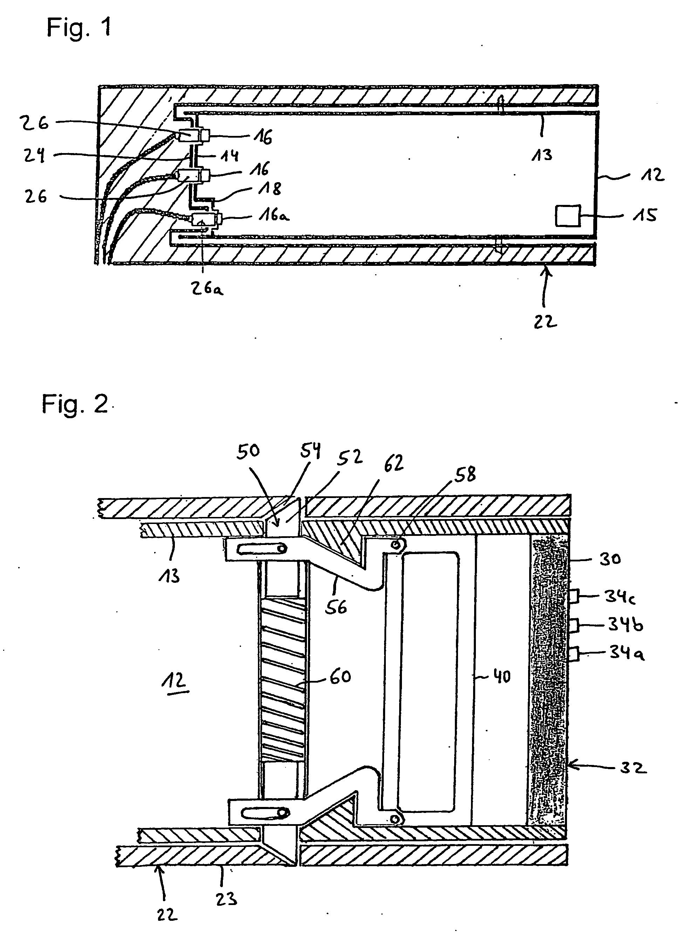

Fig. 1 zeigt ein Wechsel-Akkumodul 12, welches in eine Aufnahmeeinrichtung 22 eingesetzt ist. Das Wechsel-Akkumodul 12 weist hierzu ein im Wesentlichen rundzylindrisches Gehäuse 13 auf, welches in eine entsprechende Hülse 23 der Aufnahmeeinrichtung passend eingesetzt ist.

An der Stirnseite 14 des Gehäuses 13 sowie dem stirnseitigen Boden 24 der Hülse 23 sind zueinander komplementäre Verbinder 16 bzw. 26 angeordnet. Ein Verbinderpaar 16a bzw. 26a bildet einen Verpolschutz, in dem die Kontaktierung des Wechsel-Akkumoduls 12 nur in einer bestimmten Winkelposition möglich ist. Hierzu ist der Boden 24 der Hülse 23 geteilt und der Kontakt 26a steht in den Innenraum der Hülse 23 vor und der stirnseitige Boden 14 des Gehäuses 13 weist eine entsprechende Aussparung 18 auf.

Bezug nehmend auf Fig. 2 weist das Wechsel-Akkumodul 12 an seiner dem stirnseitigen Boden 14 gegenüber liegenden Griffseite 32 einen Handgriff 30 auf, welcher in Fig. 1 der Einfachheit halber nicht dargestellt ist. Am Handgriff 30 sind mehrere Leuchtdioden 34, in diesem Beispiel drei Leuchtdioden 34a bis 34c, derart angeordnet, dass der Benutzer die Leuchtdioden erkennen kann, wenn das Wechsel-Akkumodul 12 im Kraftfahrzeug 64 eingesetzt ist. Eine rote Leuchtdiode 34a zeigt dem Benutzer an, dass das Wechsel-Akkumodul 12 entladen ist und beim Tanken ausgetauscht werden soll, die gründe Leuchtdiode 34b zeigt dem Benutzer an, dass das Wechsel-Akkumodul noch geladen ist und nicht ausgetauscht werden braucht und die gelbe Leuchtdiode 34c zeigt dem Benutzer nach Einsetzen des Wechsel-Akkumoduls 12 in die Aufnahmeeinrichtung 22 an, dass das Wechsel-Akkumodul 12 richtig eingesetzt und eingerastet ist.

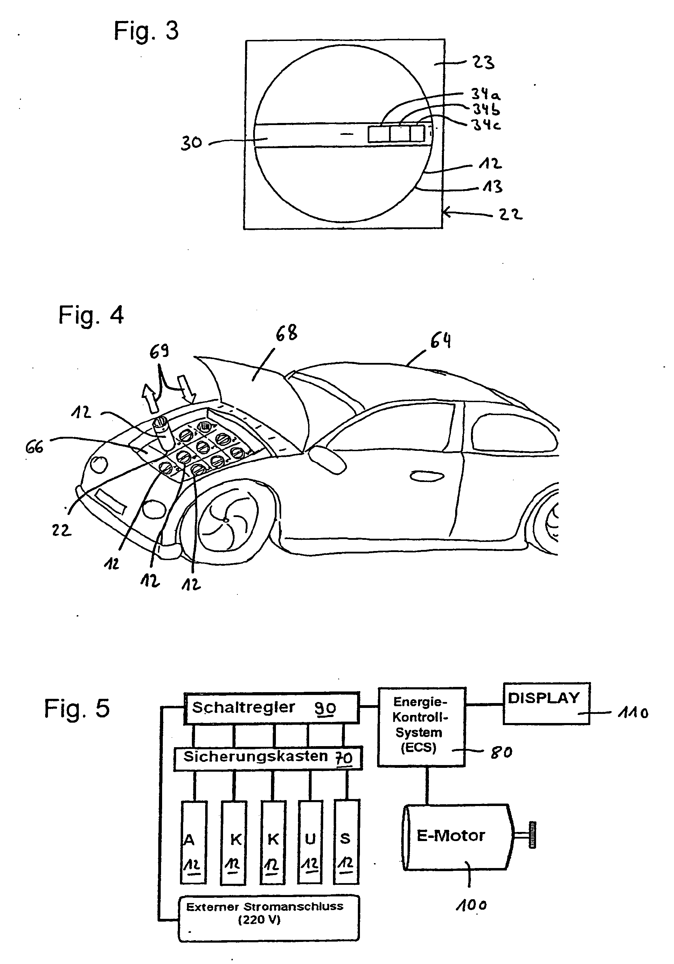

Am Handgriff 30 ist ein Zuggriff 40 angeordnet, so dass der Benutzer beim Eingreifen in den Handgriff 30 mit einer Hand den Zugriff 40 betätigen kann. Der Zugriff 40 betätigt einen Rastmechanismus 50, bei welchem Raststifte 52 in komplementäre Aussparungen 54 in der Aufnahmehülse 23 eingreifen. Durch Ziehen des Zuggriffes 40 werden Hebel 56, die an Lagern 58 drehbar gelagert sind, gegen Vorspannung einer Feder 60 nach innen schwenkend ausgelenkt, wobei die Raststifte 52 nach innen gezogen werden. Hierzu weist der Handgriff 30 an seiner seitlichen Innenseite schräge Rampen 62 auf, welche die Hebel 56 gegen die Federvorspannung nach innen drücken, wenn der Zuggriff 40 in Richtung des Handgriffs 30 gezogen wird. Durch diesen Zuggriffmechanismus kann der Benutzer das Wechsel-Akkumodul 12 mit einer Hand entrasten und unmittelbar anschließend aus der Hülse 23 herausziehen. Das Kraftfahrzeug 64 (vgl. Fig. 4) besitzt nun eine Mehrzahl von jeweils gleichartigen Aufnahmeeinrichtungen 22 und Wechsel-Akkumodulen 12, welche untereinander austauschbar sind.

Bezug nehmend auf Fig. 3 weist das Wechsel-Akkumodul 12 einen kreisrunden Querschnitt auf. Die genaue winkelmäßige Ausrichtung braucht erst erfolgen, wenn das Wechsel-Akkumodul 12 fast vollständig eingeschoben ist, nämlich um die elektrischen Verbinder am Boden zu kontaktieren. Vorher kann das Wechsel-Akkumodul 12 beliebig in der Hülse 23 gedreht werden, wodurch das Einsetzen in die Aufnahmeeinrichtung 22 erleichtert wird. Die Hülse 23 der Aufnahmeeinrichtung 22 weist einen quadratischen äußeren Querschnitt auf, wodurch ein stabiler Einbau im Kraftfahrzeug 64 ermöglicht ist.

Die Wechsel-Akkumodule 12 sind genormt und passen in allen Elektrokraftfahrzeuge in jede Aufnahmeeinrichtung 22 ebenso wie in die nachfolgend noch beschriebenen Ladeautomaten. Die Wechsel-Akkumodule 12 sind so ausgebildet, dass der Benutzer beim Herausziehen und Wiedereinsetzen der Wechsel-Akkumodule 12 zum Austausch beim Betanken praktisch nichts falsch machen kann.

Die Wechsel-Akkumodule 12 sind also im Wesentlichen kreiszylinderförmig. Sie sollten für eine manuelle Handhabung durch den Benutzer eine Masse von kleiner oder gleich 10 Kilogramm besitzen. Eine Länge von etwa 60 cm und einen Durchmesser von etwa 10 cm ist ebenfalls manuell noch gut handhabbar. Der Handgriff 30 besitzt eine axiale Länge von etwa 8 cm.

In dem in Fig. 4 dargestellten Beispiel sind die Wechsel-Akkumodule 12 bzw. die Aufnahmeeinrichtungen 22 im Vorderbau des Elektro-Kraftfahrzeugs 64 angeordnet und über die Einsetz- und Entnahmeöffnung 66 zugänglich. Die Einsetz- und Entnahmeöffnung 66 ist durch einen Deckel oder eine Haube 68, ähnlich einer Motorhaube bei einem Verbrennungsmotor-getriebenen Kraftfahrzeug, verschließbar. Durch die Einsetz- und Entnahmeöffnung 66 sind alle Wechsel-Akkumodule 12 gleichzeitig zugänglich, wenn die Haube 68 geöffnet ist und können vom Benutzer wahlweise entnommen und durch geladene Wechsel-Akkumodule 12 ersetzt werden, wie durch Pfeile 69 symbolisiert ist. Jede Aufnahmeeinrichtung 22 ist mit einer Nummer (1 bis 10) versehen, welche fest zu den Nummern im Cockpit-Energiedisplay 110 korrespondieren.

Bezug nehmend auf Fig. 5 weist jedes erfindungsgemäße Elektrokraftfahrzeug eine Steuereinrichtung 80, das sogenannte Energiekontrollsystem (ECS) auf, welches die Stromentnahme aus der Mehrzahl von Wechselakku-Modulen 12 steuert. Die Wechsel-Akkumodule 12 sind einzeln in einem Sicherungskasten 70 abgesichert. Das Energiekontrollsystem 80 steuert über einen Schaltregler 90, an welchen die Wechsel-Akkumodule 12 einzeln über den Sicherungskasten 70 angeschlossen sind, die separate Leistungsentnahme aus den Wechsel-Akkumodulen 12, je nach Leistungsanforderung durch den Elektromotor 100. Das Energiekontrollsystem 80 steuert die eingedockten Wechsel-Akkumodule 12 derart, dass immer zumindest ein geladenes Wechsel-Akkumodul 12 als Reserve zurückgehalten wird. Die anderen Wechsel-Akkumodule 12 werden einzeln oder gruppenweise nacheinander verbraucht, was ebenfalls durch das Energiekontrollsystem 80 gesteuert wird. In einem extremen Verbrauchszustand, z.B. Beschleunigung des Kraftfahrzeugs, können durch das Energiekontrollsystem 80 mehrere Wechsel-Akkumodule 12 gleichzeitig entladen werden, um den benötigten Energieverbrauch zu sichern. Nichtsdestotrotz wird zumindest das Reserve-Wechsel-Akkumodul nicht angetastet, sondern als Reserve zurückgehalten. Erst wenn alle übrigen Wechsel-Akkumodule 12 vollständig entladen sind, wird das Reserve-Wechsel-Akkumodul in Anspruch genommen.

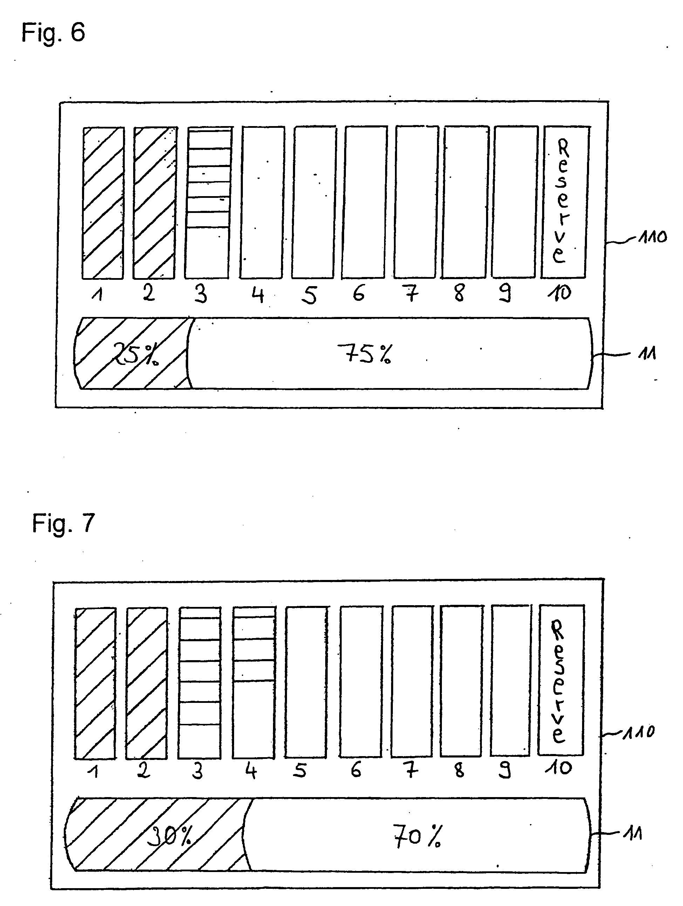

Bezug nehmend auf Fig. 6 wird die Entladung der Wechsel-Akkumodule 12 in dem Energiedisplay 110 im Cockpit des Kraftfahrzeugs für den Fahrer graphisch dargestellt. Das Energiedisplay 110 enthält für jedes der in diesem Beispiel zehn Wechsel-Akkumodule 12 (# 1 bis 10) einen Leuchtbalken, wobei die Farbe anzeigt, ob das jeweilige Wechsel-Akkumodul 12 entweder vollständig entladen ist, gerade entladen wird oder noch vollständig geladen ist. In der in Fig. 6 dargestellten Situation sind die Wechsel-Akkumodule mit den Nummern 1 und 2 bereits entladen und im Moment wird das Wechsel-Akkumodul mit der Nummer 3 entladen. Die Wechsel-Akkumodule mit den Nummern 4 bis 10, wobei das Wechsel-Akkumodul mit der Nummer 10 die Reserve repräsentiert, sind noch nicht angetastet. Daher leuchten die Ladestandsanzeigen 1 bis 10 der einzelnen Wechsel-Akkumodule 12 in unterschiedlichen Farben, in diesem Beispiel die Ladestandsanzeigen 1 und 2 rot (schräge Schraffur) für vollständig entladen, die Ladestandsanzeige 3 gelb (horizontale Schraffur) für "wird gerade entladen" und die Ladestandsanzeigen 4 bis 10 grün (keine Schraffur) für vollständig geladen. Somit kann der Fahrer die Anzahl der momentan gerade in Anspruch genommenen Wechsel-Akkumodule 12 überwachen. Hierbei leuchtet die Ladestandsanzeige 3 zur Darstellung des Ist-Ladezustands des Wechsel-Akkumoduls mit der Nummer 3 von oben gesehen etwa 60% in gelb und etwa 40% in grün. Die Gesamtlänge der Ladestandsanzeigen 1 bis 10 repräsentiert dabei jeweils die Maximalladung der Wechsel-Akkumodule. Somit kann der Fahrer auch den momentanen Ladestand jedes einzelnen Wechsel-Akkumoduls 12 nach Art einer Füllstandsanzeige überwachen. Unter den Einzelanzeigen 1 bis 10 befindet sich noch eine Gesamtladezustandsanzeige 11, die im Wege eines Balkendiagramms den momentanen Entladungszustand von in diesem Beispiel etwa 25% anzeigt.

Wenn das Reserve-Wechsel-Akkumodul mit der Nummer 10 angetastet wird, erscheint im Display 100 eine Warnmeldung, die den Fahrer darauf hinweist, dass schnellstmöglich getankt werden muss, z.B. durch Blinken des Leuchtbalkens 10. Der Reserve-Status kann in Abhängigkeit von dem Ladestand der einzelnen Wechsel-Akkumodule automatisch einer anderen Nummer zugewiesen werden. Das Energiedisplay blendet dann die Anzeige "Reserve" auf einer anderen Ladestandsanzeige als der Nummer 10 ein.

Bezug nehmend auf Fig. 7 ist ein zweiter Entlademodus mit höherer Leistungsanforderung, z.B. beim Beschleunigen dargestellt. In diesem Fall werden momentan die Wechsel-Akkumodule mit den Nummern 3 und 4 gleichzeitig entladen, wie an der horizontalen Schraffur (gelbes Leuchten) erkennbar ist, es wurde also im Vergleich zu Fig. 6 das Wechsel-Akkumodul mit der Nummer 4 zur Entladung zusätzlich zur Nummer 3 zugeschaltet. Der Ladezustand des Wechsel-Akkumoduls mit der Nummer 3 beträgt hier etwa 20% und der Nummer 4 etwa 55%. Beim erneuten Übergehen in eine ruhigere Fahrweise, also bei geringerer Leistungsanforderung wird das zuletzt in Anspruch genommene Wechsel-Akkumodul mit der Nummer 4 wieder vom Verbrauch abgeschaltet und wieder das vorher bereits in Anspruch genommene Wechsel-Akkumodul mit der Nummer 3 alleine entladen. Es sind also verschiedene Entlademodi vorgesehen, wobei die Anzahl der momentan entladenen Wechsel-Akkumodule 12 in Ansprechen auf die Leistungsanforderung gesteuert wird.

Beim Einschieben der Wechsel-Akkumodule 12 in die Hülsen 23 werden die Kontaktverbindungen 16, 26 geschlossen und anschließend rasten die Stifte 52 in den Aussparungen 54 ein. Wenn ein Wechsel-Akkumodul 12 korrekt eingerastet ist, signalisiert die gelbe Leuchtdiode 34c dies dem Benutzer, so dass sichergestellt ist, das sich beim Fahren keine Kontakte lösen.

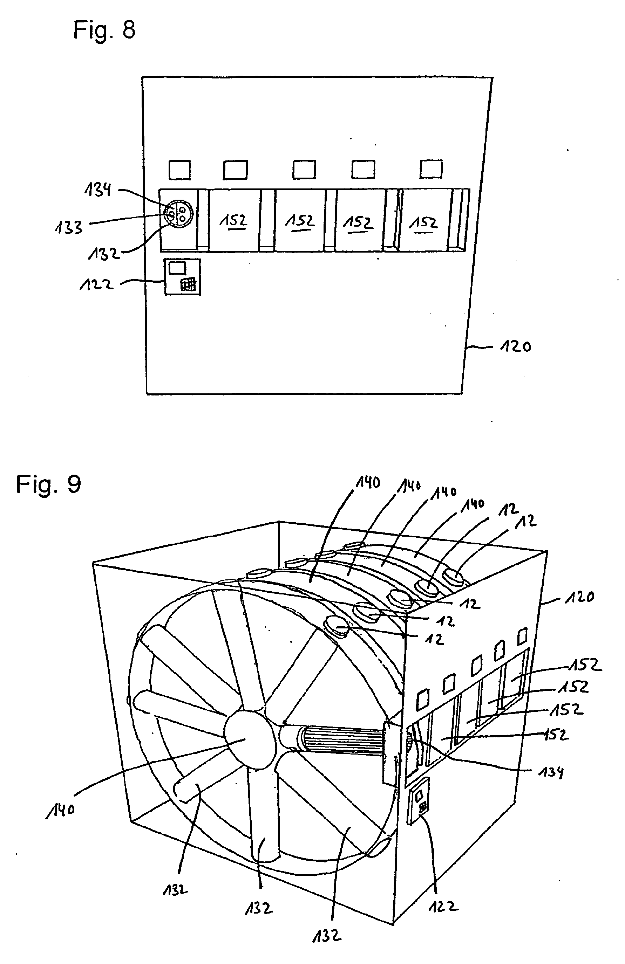

Zum Tanken des Kraftfahrzeugs fährt der Benutzer eine spezielle Elektrotankstelle mit Ladeautomaten 120 an (Fig. 8, 9). Anders als bei Mineralöltankstellen geht von den Ladeautomaten 120 keine Gefahr, wie z.B. Bodenverunreinigungen durch auslaufenden Kraftstoff oder Ähnliches aus. Die Ladeautomaten 120 können daher nicht nur an konventionellen Mineralöltankstellen, sondern auch z.B. an Parkplätzen von Einkaufszentren und öffentlichen Einrichtungen in Innenstädten und in Wohngebieten aufgestellt werden.

Der Benutzer autorisiert sich zunächst am Bezahlterminal 122, z.B. mit einer Kreditkarte oder speziellen Tankkarte. Anschließend schiebt er das erste entladene Wechsel-Akkumodul 12 durch eine Öffnung 132 in eine Hülse 134, die komplementär zu dem Gehäuse 13 des Wechsel-Akkumoduls 12 geformt ist, ein. Die Hülse 134 gehört zu einer Aufnahmeeinrichtung 130. Der Ladeautomat 120 erkennt das korrekte Einsetzen des entladenen Wechsel-Akkumoduls 12 und gibt ein gleichartiges, aber vollgeladenes Wechsel-Akkumodul 12 frei, z.B. durch Rotation einer Walze 140 oder durch Öffnen einer anderen Klappe 152. Der Ladeautomat 120 umfasst eine Vielzahl von Walzen 140, die jeweils eine Vielzahl von Wechsel-Akkumodul-Aufnahmeeinrichtungen 130 in radialer Orientierung enthalten. Je nachdem, wo vollgeladene Wechsel-Akkumodule 12 in dem Ladeautomaten 120 enthalten sind, wird eine der Walzen 140 so gedreht und die zugehörige Klappe 152 geöffnet, dass der Nutzer das entsprechende vollgeladene Wechsel-Akkumodul 12 herausziehen kann. Dieser Vorgang wird so oft wiederholt, bis der Nutzer alle entladenen Wechsel-Akkumodule 12 durch geladene Wechsel-Akkumodule 12 ausgetauscht hat. Anschließend setzt der Nutzer die ausgetauschten, geladenen Wechsel-Akkumodule 12 in sein Kraftfahrzeug ein und kann seine Fahrt mit vollgeladener Batterieanordnung fortsetzen.

Die Wechsel-Akkumodule 12 besitzen ferner einen Datenspeicher 15, mit dem das konkrete Wechsel-Akkumodul 12 identifizierbar ist und auf dem die Anzahl der Ladezyklen gespeichert ist. Der Ladeautomat 120 überprüft bei jedem Einsetzen eines entladenen Wechsel-Akkumoduls dieses auf seine Funktionalität. Wechsel-Akkumodule 12, welche das Ende ihrer Lebensdauer erreicht haben, werden automatisch von dem Ladeautomaten 120 erkannt und aussortiert.

Die Ladeautomaten 120 benötigen lediglich einen Stromanschluss und eine Datenverbindung für den Zahlvorgang. Die Stromversorgung erfolgt über das herkömmliche Stromnetz, Windkraftanlagen und/oder Photovoltaik-Module, um so weit möglich regenerative Energiequellen zu nutzen. So weit möglich, werden die Wechsel-Akkumodule 12 bevorzugt durch die regenerativen Energienquellen geladen und nur wenn notwendig auf das Stromnetz zurückgegriffen. Falls ein Zustand erreicht wird, bei dem alle eingesetzten Wechsel-Akkumodule 12 voll geladen sind, kann die regenerative Überschussenergie in das Stromnetz eingespeist werden.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann. Ferner ist ersichtlich, dass die Merkmale unabhängig davon, ob sie in der Beschreibung, den Ansprüchen, den Figuren oder anderweitig offenbart sind auch einzeln wesentliche Bestandteile der Erfindung definieren, selbst wenn sie zusammen mit anderen Merkmalen gemeinsam beschrieben sind.

## Patentansprüche

1. Kraftfahrzeug (64) mit Elektroantrieb umfassend:
einen Elektromotor (100) für den Antrieb des Kraftfahrzeugs,
eine wiederaufladbare Batterieanordnung zur Versorgung des Elektromotors (100), wobei die Batterieanordnung eine Mehrzahl (# 1 - 10) von separaten Wechsel-Akkumodulen (12) und eine Mehrzahl von Aufnahmeeinrichtungen (22) für die Wechsel-Akkumodule (12) umfasst, wobei die Wechsel-Akkumodule (12) jeweils ein in die Aufnahmeeinrichtungen (22) passendes Gehäuse (12) und mehrere in dem Gehäuse (13) beherbergte, zusammen geschaltete Akkuzellen umfassen, wobei das Kraftfahrzeug eine Einsetz- und Entnahmeöffnung für die Wechsel-Akkumodule aufweist, derart dass die Wechsel-Akkumodule (12) durch die Einsetz- und Entnahmeöffnung jeweils einzeln in eine der Aufnahmeeinrichtungen (22) einsetzbar bzw. aus der Aufnahmeeinrichtung (22) entnehmbar sind, wobei die Wechsel-Akkumodule (12) und die Aufnahmeeinrichtungen (22) jeweils zueinander komplementäre elektrische Verbinder (16, 26) besitzen, und wobei die Wechsel-Akkumodule (12) und die Aufnahmeeinrichtungen (22) der Batterieanordnung jeweils gleichartig ausgebildet sind, so dass die Wechsel-Akkumodule (12) jeweils in eine beliebige der Aufnahmeeinrichtungen (22) einsetzbar sind,
eine Steuereinrichtung (80), welche beim Fahren die Energieentnahme aus den Wechsel-Akkumodulen (12) selektiv steuert, derart dass die Wechsel-Akkumodule (12) einzeln oder gruppenweise sukzessive entladen werden,
und somit ein modulares Wechsel-Akkusystem in dem Kraftfahrzeug gebildet wird, bei welchem die Wechsel-Akkumodule (12) selektiv in Abhängigkeit vom jeweiligen Ladungszustand austauschbar sind,
**dadurch gekennzeichnet, dass**
einem oder einer Gruppe der Wechsel-Akkumodule (12) ein Reserve-Status (10) zugewiesen ist, und die Energieentnahme von der Steuereinrichtung (80) derart gesteuert wird, dass die Wechsel-Akkumodule (12) mit dem Reserve-Status (10) erst dann entladen werden, wenn die übrigen (1 - 9) Wechsel-Akkumodule bereits vollständig entladen sind und wobei die Ladungszustandsanzeige eine Reserve-Warnmeldung ausgibt, wenn die Wechsel-Akkumodule mit dem Reserve-Status (10) entladen werden.

2. Kraftfahrzeug (64) nach Anspruch 1,
ferner umfassend eine Ladungszustandsanzeige (110) im Fahrzeuginneren, welche dem Fahrer den jeweiligen momentanen Ist-Ladungszustand der Wechsel-Akkumodule einzeln oder gruppenweise anzeigt.

3. Kraftfahrzeug (64) nach Anspruch 2,
wobei die Ladungszustandsanzeige (110) den Ist-Ladungszustand und den maximalen Ladungszustand anzeigt.

4. Kraftfahrzeug (64) nach einem der vorstehenden Ansprüche,
wobei die Ladungszustandanzeige (110) für die Wechsel-Akkumodule (12) jeweils einzeln oder gruppenweise einen Leuchtbalken enthält, wobei die Länge des in einer vorbestimmten Farbe beleuchteten Teils des Leuchtbalkens zu dem Ladungszustand des zugehörigen Wechsel-Akkumoduls (12) oder der zugehörigen Gruppe von Wechsel-Akkumodulen (12) korrespondiert und zumindest ein Leuchtbalken den Wechsel-Akkumodulen mit dem Reserve-Status (10) zugeordnet ist.

5. Kraftfahrzeug (64) nach Anspruch 4,
wobei für jedes Wechsel-Akkumodul (12) eine Entladeanzeigeeinrichtung umfasst ist, die anzeigt, welche Wechsel-Akkumodule oder Gruppen von Wechsel-Akkumodulen momentan entladen werden.

6. Kraftfahrzeug (64) nach einem der vorstehenden Ansprüche,
wobei die Steuereinrichtung (80) in Ansprechen auf die Leistungsanforderung durch den Elektromotor die Anzahl der zu entladenden Wechsel-Akkumodule (12) oder Gruppen von Wechsel-Akkumodulen (12) steuert.

7. Kraftfahrzeug (64) nach einem der vorstehenden Ansprüche,
wobei die Wechsel-Akkumodule (12) oder die Aufnahmeeinrichtungen (22) jeweils eine eigene Ladungszustandsanzeige (34a, b) aufweisen, welche unmittelbar an dem jeweiligen Wechsel-Akkumodul (12) bzw. der jeweiligen Aufnahmeeinrichtung ablesbar ist.

8. Kraftfahrzeug (64) nach einem der vorstehenden Ansprüche,
wobei die Wechsel-Akkumodule (12) und die Aufnahmeeinrichtungen jeweils zueinander komplementäre Rasteinrichtungen (52, 54) aufweisen und die Wechsel-Akkumodule oder die Aufnahmeeinrichtungen (22) jeweils eine Anzeigeeinrichtung (34c) aufweisen, welche anzeigt, ob das jeweilige Wechsel-Akkumodul (12) korrekt in der Aufnahmeeinrichtung (22) eingerastet ist.

9. Kraftfahrzeug (64) nach einem der vorstehenden Ansprüche,
wobei die Wechsel-Akkumodule (12) jeweils einen Handgriff (30) und eine Auslöseeinrichtung (40) zum Lösen der Rasteinrichtung umfassen, welche am Handgriff (30) des jeweiligen Wechsel-Akkumoduls (12) angeordnet ist, derart dass die Wechsel-Akkumodule (12) mit einer Hand entrastbar und aus der Aufnahmeeinrichtung (22) herausziehbar sind.

10. Kraftfahrzeug (64) nach einem der vorstehenden Ansprüche,
wobei das Gehäuse (13) der Wechsel-Akkumodule (12) eine länglich zylindrische Form aufweist und die Aufnahmeeinrichtung eine hülsenförmige Fassung (23) besitzt, in welche jeweils eines der länglich zylindrischen Gehäuse (13) linear einschiebbar ist.

11. Kraftfahrzeug (64) nach Anspruch 10,
wobei die hülsenförmige Fassung (23) einen runden inneren Querschnitt und einen eckigen äußeren Querschnitt aufweist.

12. Kraftfahrzeug (64) nach Anspruch 10 oder 11,
wobei die elektrischen Verbinder (16, 26) als Steckverbinder ausgebildet und jeweils an der Stirnseite (14) der länglich zylindrischen Gehäuse (13) und der hülsenförmigen Fassungen (23) positioniert sind.

13. Wechselakku-Kreislauf-System mit einer Vielzahl von umlaufenden Wechsel-Akkumodulen (12) zum Betanken von Kraftfahrzeugen mit Elektroantrieb mit einer Vielzahl von elektromotorisch angetriebenen Kraftfahrzeugen (64) nach einem der vorstehenden Ansprüche und eine Vielzahl von elektrischen Tankstellen jeweils mit zumindest einem elektrischen Ladeautomaten (120),
wobei die Kraftfahrzeuge (64) jeweils Folgendes umfassen:
eine wiederaufladbare Batterieanordnung zur Versorgung des Elektromotors (100), wobei die Batterieanordnung eine Mehrzahl von separaten Wechsel-Akkumodulen (12) und eine Mehrzahl von Aufnahmeeinrichtungen (22) für die Wechsel-Akkumodule (12) umfasst, wobei die Wechsel-Akkumodule (12) jeweils ein in die Aufnahmeeinrichtungen (22) passendes Gehäuse (13) und mehrere in dem Gehäuse (13) beherbergte, zusammen geschaltete Akkuzellen umfassen, wobei das Kraftfahrzeug (64) eine Einsetz- und Entnahmeöffnung für die Wechsel-Akkumodule (12) aufweist, derart dass die Wechsel-Akkumodule (12) durch die Einsetz- und Entnahmeöffnung jeweils einzeln in eine der Aufnahmeeinrichtungen (22) eingesetzt bzw. aus der Aufnahmeeinrichtung (22) entnommen werden, wobei die Wechsel-Akkumodule (12) und die Aufnahmeeinrichtungen (22) jeweils zueinander komplementäre elektrische Verbinder (16, 26) besitzen, und wobei die Wechsel-Akkumodule (12) und die Aufnahmeeinrichtungen (22) der Batterieanordnung jeweils gleichartig ausgebildet sind, so dass die Wechsel-Akkumodule (12) jeweils in eine beliebige der Aufnahmeeinrichtungen (22) einsetzbar sind,
eine Steuereinrichtung (80), welche beim Fahren die Energieentnahme aus den Wechsel-Akkumodulen (12) selektiv steuert, derart dass die Wechsel-Akkumodule (12) einzeln oder gruppenweise sukzessive entladen werden,
und somit ein modulares Wechselakkusystem in dem Kraftfahrzeug (64) gebildet wird, bei welchem die entladenen Wechsel-Akkumodule (12) selektiv in Abhängigkeit vom jeweiligen Ladungszustand ausgetauscht werden;
wobei die Ladeautomaten (120) jeweils Folgendes umfassen:
eine Mehrzahl von Aufnahmeeinrichtungen (132) für die Wechsel-Akkumodule (12),
eine Ladeeinrichtung zum Aufladen der Wechsel-Akkumodule,
zumindest eine Einsetz- und Entnahmeöffnung (134) für die Wechsel-Akkumodule, derart dass die Wechsel-Akkumodule (12) durch die Einsetz- und Entnahmeöffnung jeweils in eine der Aufnahmeeinrichtungen (132) eingesetzt bzw. aus der Aufnahmeeinrichtung entnommen werden, wobei die Wechsel-Akkumodule (12) und die Aufnahmeeinrichtungen (132) jeweils zueinander komplementäre elektrische Verbinder besitzen, und wobei die Aufnahmeeinrichtungen (132) des Ladeautomaten (120) gleichartig ausgebildet sind, so dass die Wechsel-Akkumodule (12) jeweils in eine beliebige der Aufnahmeeinrichtungen (132) einsetzbar sind,
Mittel (122) die in Ansprechen auf einen Bezahlvorgang und ein Einsetzen eines oder mehrerer entladener Wechsel-Akkumodule (12) in den Ladeautomaten automatisch eine gleiche Anzahl anderer gleichartiger aufgeladener Wechsel-Akkumodule (12) zur Entnahme bereit stellen,
**dadurch gekennzeichnet, dass**
einem oder einer Gruppe der Wechsel-Akkumodule (12) in dem Kraftfahrzeug (64) ein Reserve-Status (10) zugewiesen ist, und die Energieentnahme von der Steuereinrichtung (80) derart gesteuert wird, dass die Wechsel-Akkumodule (12) mit dem Reserve-Status (10) erst dann entladen werden, wenn die übrigen (1 - 9) Wechsel-Akkumodule bereits vollständig entladen sind und wobei die Ladungszustandsanzeige eine Reserve-Warnmeldung ausgibt, wenn die Wechsel-Akkumodule mit dem Reserve-Status (10) entladen werden.

14. Wechselakku-Kreislauf-System nach Anspruch 13, wobei die Ladeautomaten (120) jeweils umfassen:
ein Benutzer-Paneel (122) mit einer Bezahleinrichtung und
ein Transport- und Öffnungssystem (140, 152), welches automatisch aufgeladene Wechsel-Akkumodule (12) an Entnahmeöffnungen transportiert und in Ansprechen auf den Bezahlvorgang und das Einsetzen eines oder mehrerer entladener Wechsel-Akkumodule (12) in den Ladeautomaten (120) automatisch gleichzeitig oder nacheinander die gleiche Anzahl von aufgeladenen Wechsel-Akkumodulen (12) zur Entnahme durch den Nutzer an den Entnahmeöffnungen freigibt,
wobei das Transport- und Öffnungssystem ein Klappensystem (152) und eine Mehrzahl von nebeneinander angeordneten Walzen (140), welche an der Umfangsseite jeweils eine Mehrzahl von radial verlaufenden Aufnahmehülsen (133) für die Wechsel-Akkumodule (12) aufweisen, wobei die Walzen (140) unabhängig voneinander drehbar sind, wobei automatisch zum Einschieben der entladenen Wechsel-Akkumodule leere Aufnahmehülsen (133) zu den Entnahmeeinrichtungen gedreht und entsprechende Klappen (152) geöffnet und zum Entnehmen der anderen aufgeladenen Wechsel-Akkumodule (12) bestückte Aufnahmehülsen (133) zu den Entnahmeeinrichtungen gedreht und entsprechende Klappen (152) geöffnet werden.

15. Wechselakku-Kreislauf-System nach einem der vorstehenden Ansprüche 13 oder 14,
wobei die Ladeautomaten (120) eine Einrichtung zum Auslesen der Wechsel-Akkumodul-Datenspeicher (15), auf denen jeweils die Anzahl der Ladezyklen gespeichert sind, aufweist, wobei die Einrichtung in Ansprechen auf das Überschreiten einer vorbestimmten Anzahl von Ladezyklen, das jeweilige Wechsel-Akkumodul (12) automatisch aus dem Kreislauf nimmt.

## Claims

1. A motor vehicle (64) with electric drive, comprising:
an electric motor (100) for driving the motor vehicle;
a rechargeable battery arrangement for supplying the electric motor (100), the battery arrangement comprising a plurality (# 1 - 10) of separate swap battery modules (12) and a plurality of receiving means (22) for the swap battery modules (12), wherein each of said swap battery modules (12) comprises a casing (13) that fits into the receiving means (22), and a plurality of rechargeable battery cells housed in the casing (13) and connected together, wherein the motor vehicle has an insertion and removal opening for the swap battery modules so that the swap battery modules (12) are separately insertable into one of the receiving means (22) and removable from the receiving means (22) through said insertion and removal opening, wherein the swap battery modules (12) and the receiving means (22) have respective electrical connectors (16, 26) complementary to each other, and wherein the swap battery modules (12) and the receiving means (22) of the battery arrangement, respectively, are formed uniformly, so that each of the swap battery modules (12) is insertable into any one of the receiving means (22);
a control device (80) which, during driving, selectively controls the energy output from the swap battery modules (12) such that the swap battery modules (12) are discharged successively, one by one or in groups;
and so providing a modular swap battery system in the motor vehicle in which the swap battery modules (12) are selectively replaceable in function of their respective state of charge
**characterized in that**
a reserve status (10) is allocated to a single one or a group of the swap battery modules (12), and energy output is controlled by the control device (80) such that the swap battery modules (12) with reserve status (10) are only discharged when the remaining (1 - 9) swap battery modules have been completely discharged, and wherein the charge state indicator gives a reserve warning message when the swap battery module(s) with reserve status (10) are being discharged.

2. The motor vehicle (64) of claim 1, further comprising a charge state indicator (110) in the interior of the vehicle which indicates the respective current state of charge of the swap battery modules, individually or in groups, to the driver.

3. The motor vehicle (64) of claim 2, wherein the charge state indicator (110) indicates the current state of charge and the maximum state of charge.

4. The motor vehicle (64) according to any of the preceding claims, wherein the charge state indicator (110) includes a respective light bar for an individual one or a group of the swap battery modules (12), wherein the length of a portion of the light bar that is illuminated in a predefined color corresponds to the state of charge of the associated swap battery module (12) or the associated group of swap battery modules (12), and wherein at least one light bar is associated with the swap battery module(s) with reserve status (10).

5. The motor vehicle (64) of claim 4, comprising discharge indicating means for each swap battery module (12) which indicate which of the swap battery modules or groups of swap battery modules are currently being discharged.

6. The motor vehicle (64) according to any of the preceding claims, wherein the control device (80) controls the number of swap battery modules (12) or groups of swap battery modules (12) to be discharged in response to the power requirement of the electric motor.

7. The motor vehicle (64) according to any of the preceding claims, wherein the swap battery modules (12) or the receiving means (22) each have a proper charge status indicator (34a, b) which is readable directly at the respective swap battery module (12) or the respective receiving means.

8. The motor vehicle (64) according to any of the preceding claims, wherein the swap battery modules (12) and the receiving means have respective latching means (52, 54) complementary to each other, and wherein the swap battery modules or the receiving means (22) have a respective indication means (34c) which indicates whether the respective swap battery module (12) is correctly latched in the receiving means (22).

9. The motor vehicle (64) according to any of the preceding claims, wherein the swap battery modules (12) each comprise a handle (30) and a release means (40) for releasing the latching means which is arranged at the handle (30) of the respective swap battery module (12), so that the swap battery modules (12) can be unlatched and removed from the receiving means (22) with one hand.

10. The motor vehicle (64) according to any of the preceding claims, wherein the casing (13) of the swap battery modules (12) has an elongated cylindrical form, and said receiving means has a sleeve-shaped mount (23) into which a respective one of the elongated cylindrical casings (13) can be linearly inserted.

11. The motor vehicle (64) of claim 10, wherein the sleeve-shaped mount (23) has a circular inner cross-section and an angular outer cross-section.

12. The motor vehicle (64) of claim 10 or 11, wherein the electrical connectors (16, 26) are designed as plug-in connectors and disposed at a respective front end (14) of the elongated cylindrical casings (13) and the sleeve-shaped mounts (23), respectively.

13. A swap battery cycle system comprising a plurality of cycling swap battery modules (12) for refilling motor vehicles with electric drive, a plurality of electric motor driven motor vehicles (64) according to any of the preceding claims, and a plurality of electric refilling stations each including at least one electric charging machine (120);
wherein each of the motor vehicles (64) comprises:
a rechargeable battery arrangement for supplying the electric motor (100), the battery arrangement comprising a plurality of separate swap battery modules (12) and a plurality of receiving means (22) for said swap battery modules (12), with of the swap battery modules (12) each comprising a casing (13) that fits into the receiving means (22), and a plurality of rechargeable battery cells housed in the casing (13) and connected together, wherein the motor vehicle (64) has an insertion and removal opening for the swap battery modules (12) so that the swap battery modules (12) can separately be inserted into one of the receiving means (22) and removed from the receiving means (22) through said insertion and removal opening, wherein the swap battery modules (12) and the receiving means (22) have respective electrical connectors (16, 26) complementary to each other, and wherein the swap battery modules (12) and the receiving means (22) of the battery arrangement, respectively, are formed uniformly, so that each of the swap battery modules (12) is insertable into any one of the receiving means (22),
a control device (80) which, during driving, selectively controls the energy output from the swap battery modules (12) such that the swap battery modules (12) are discharged successively, one by one or in groups,
and so providing a modular swap battery system in the motor vehicle (64) in which the discharged swap battery modules (12) are selectively replaced in function of their respective state of charge;
wherein each of the charging machines (120) comprises:
a plurality of receiving means (132) for the swap battery modules (12),
a recharging device for recharging the swap battery modules,
at least one insertion and removal opening (134) for the swap battery modules, so that the swap battery modules (12) are inserted into one of the receiving means (132) and removed from the receiving means through said insertion and removal opening, wherein the swap battery modules (12) and the receiving means (132) each have respective electrical connectors complementary to each other, and wherein the receiving means (132) of the charging machine (120) are formed uniformly so that the swap battery modules (12) are insertable into any one of the receiving means (132), and
means (122) which in response to a payment procedure and insertion of one or more discharged swap battery modules (12) into the charging machine automatically provide the same number of other, charged swap battery modules (12) of the same type for removal,
**characterized in that**
a reserve status (10) is allocated to a single one or a group of the swap battery modules (12) in the motor vehicle (64), and energy output is controlled by the control device (80) such that the swap battery modules (12) with reserve status (10) are only discharged when the remaining (1 - 9) swap battery modules have been completely discharged, and wherein the charge state indicator gives a reserve warning message when the swap battery module(s) with reserve status (10) are being discharged.

14. The swap battery cycle system of claim 13, wherein each of the charging machines (120) comprises:
a user panel (122) with a payment device; and
a transfer and opening system (140, 152) which automatically transfers charged swap battery modules (12) to removal openings and, in response to the payment procedure and insertion of one or more discharged swap battery modules (12) into the charging machine (120), automatically releases, simultaneously or successively, the same number of charged swap battery modules (12) at the removal openings for removal by the user,
wherein the transfer and opening system comprises a shutter system (152) and a plurality of rollers (140) disposed adjacent to one another, each of which has a plurality of radially extending receiving sleeves (133) for the swap battery modules (12) at its peripheral side, the rollers (140) being rotatable independently from each other, wherein empty receiving sleeves (133) are automatically rotated to the removal means and corresponding shutters (152) are opened for inserting discharged swap battery modules, and loaded receiving sleeves (133) are rotated to the removal means and corresponding shutters (152) are opened for removal of the other, charged swap battery modules (12).

15. The swap battery cycle system according to any of the preceding claims 13 or 14, wherein the charging machines (120) have means for reading the data storage (15) of the swap battery modules in which the respective number of recharge cycles is stored, wherein said means in response to a swap battery module (12) exceeding a predefined number of recharge cycles automatically excludes the respective module from the cycle.

## Revendications

1. Véhicule automobile (64) à entraînement électrique comprenant un moteur électrique (100) pour l'entraînement du véhicule automobile, comprenant un ensemble batterie rechargeable pour alimenter le moteur électrique (100), l'ensemble batterie comprenant une pluralité (# 1 - 10) de modules accumulateurs interchangeables (12) séparés et une pluralité de dispositifs de réception (22) pour les modules accumulateurs interchangeables (12), les modules accumulateurs interchangeables (12) comprenant chacun un boîtier (12) s'insérant dans les dispositifs de réception (22) et plusieurs éléments d'accumulateur couplés ensemble, logés dans le boîtier (13), le véhicule automobile présentant une ouverture d'insertion et d'extraction pour les modules accumulateurs interchangeables, de sorte que les modules accumulateurs interchangeables (12) peuvent chacun être insérés individuellement dans un des dispositifs de réception (22) ou extraits du dispositif de réception (22) à travers l'ouverture d'insertion et d'extraction, les modules accumulateurs interchangeables (12) et les dispositifs de réception (22) possédant chaque fois des connecteurs électriques (16, 26) complémentaires, et les modules accumulateurs interchangeables (12) et les dispositifs de réception (22) de l'ensemble batterie étant chaque fois réalisés de manière identique, de sorte que les modules accumulateurs interchangeables (12) peuvent chacun être insérés dans n'importe lequel des dispositifs de réception (22), comprenant un dispositif de commande (80), lequel, pendant la conduite, commande sélectivement le prélèvement d'énergie à partir des modules accumulateurs interchangeables (12) de façon que les modules accumulateurs interchangeables (12) soient déchargés successivement individuellement ou par groupes, et comprenant un système d'accumulateurs interchangeables modulaire étant ainsi formé dans le véhicule automobile, dans lequel les modules accumulateurs interchangeables (12) peuvent être échangés sélectivement en fonction de leur état de charge respectif, **caractérisé en ce qu'**un statut de réserve (10) est attribué à un ou à un groupe de modules accumulateurs interchangeables (12), et le prélèvement d'énergie est commandé par le dispositif de commande (80) de façon que les modules accumulateurs interchangeables (12) ayant le statut de réserve (10) ne soient déchargés que lorsque les autres (1 - 9) modules accumulateurs interchangeables sont déjà complètement déchargés, l'indicateur d'état de charge émettant un message d'avertissement de réserve lorsque les modules accumulateurs interchangeables ayant le statut de réserve (10) sont déchargés.

2. Véhicule automobile (64) selon la revendication 1, comprenant en outre, à l'intérieur du véhicule, un indicateur d'état de charge (110) qui indique au conducteur, individuellement ou par groupes, l'état de charge réel momentané respectif des modules accumulateurs interchangeables.

3. Véhicule automobile (64) selon la revendication 2, dans lequel l'indicateur d'état de charge (110) indique l'état de charge réel et l'état de charge maximal.

4. Véhicule automobile (64) selon l'une des revendications précédentes, dans lequel l'indicateur d'état de charge (110) pour les modules accumulateurs interchangeables (12) contient chaque fois individuellement ou par groupes une barre lumineuse, la longueur de la partie éclairée dans une couleur prédéterminée de la barre lumineuse correspondant à l'état de charge du module accumulateur interchangeable (12) associé ou du groupe de modules accumulateurs interchangeables (12) associé, et au moins une barre lumineuse étant associée aux modules accumulateurs interchangeables ayant le statut de réserve (10).

5. Véhicule automobile (64) selon la revendication 4, dans lequel est prévu, pour chaque module accumulateur interchangeable (12), un dispositif d'indication de décharge qui indique quels modules accumulateurs interchangeables ou groupes de modules accumulateurs interchangeables sont momentanément déchargés.

6. Véhicule automobile (64) selon l'une des revendications précédentes, dans lequel le dispositif de commande (80) commande le nombre de modules accumulateurs interchangeables (12) ou de groupes de modules accumulateurs interchangeables (12) à décharger en réponse à la demande de puissance du moteur électrique.

7. Véhicule automobile (64) selon l'une des revendications précédentes, dans lequel les modules accumulateurs interchangeables (12) ou les dispositifs de réception (22) présentent chacun leur propre indicateur d'état de charge (34a, b), lesquels peuvent être lus directement sur le module accumulateur interchangeable (12) respectif ou sur le dispositif de réception respectif.

8. Véhicule automobile (64) selon l'une des revendications précédentes, dans lequel les modules accumulateurs interchangeables (12) et les dispositifs de réception présentent chaque fois des dispositifs d'encliquetage (52, 54) complémentaires et les modules accumulateurs interchangeables ou les dispositifs de réception (22) présentent chaque fois un dispositif indicateur (34c) qui indique si le module accumulateur interchangeable (12) respectif est correctement encliqueté dans le dispositif de réception (22).

9. Véhicule automobile (64) selon l'une des revendications précédentes, dans lequel les modules accumulateurs interchangeables (12) comprennent chacun une poignée (30) et un dispositif de déclenchement (40) pour débloquer le dispositif d'encliquetage, lequel est disposé sur la poignée (30) du module accumulateur interchangeable (12) respectif, de façon que les modules accumulateurs interchangeables (12) puissent être désencliquetés et extraits du dispositif de réception (22) d'une seule main.

10. Véhicule automobile (64) selon l'une des revendications précédentes, dans lequel le boîtier (13) des modules accumulateurs interchangeables (12) présente une forme cylindrique allongée et le dispositif de réception possède une douille en forme de tube (23) dans laquelle, à chaque fois, un des boîtiers cylindriques allongés (13) peut être inséré linéairement.

11. Véhicule automobile (64) selon la revendication 10, dans lequel la douille en forme de tube (23) présente une section transversale intérieure ronde et une section transversale extérieure polygonale.

12. Véhicule automobile (64) selon la revendication 10 ou 11, dans lequel les connecteurs électriques (16, 26) sont réalisés sous la forme de connecteurs enfichables et sont respectivement positionnés sur la face frontale (14) des boîtiers cylindriques allongés (13) et des douilles en forme de tube (23).

13. Système de circulation d'accumulateurs interchangeables comprenant une pluralité de modules accumulateurs interchangeables (12) circulants pour la recharge de véhicules à entraînement électrique, une pluralité de véhicules automobiles (64) entraînés par moteur électrique selon l'une des revendications précédentes et une pluralité de stations de recharge électrique équipées chacune d'au moins un automate de charge électrique (120), les véhicules automobiles (64) comprenant chacun un ensemble batterie rechargeable pour alimenter le moteur électrique (100), l'ensemble batterie comprenant une pluralité de modules accumulateurs interchangeables (12) séparés et une pluralité de dispositifs de réception (22) pour les modules accumulateurs interchangeables (12), les modules accumulateurs interchangeables (12) comprenant chacun un boîtier (13) s'insérant dans les dispositifs de réception (22) et plusieurs éléments d'accumulateur couplés ensemble, logés dans le boîtier (13), le véhicule automobile (64) présentant une ouverture d'insertion et d'extraction pour les modules accumulateurs interchangeables (12), de sorte que les modules accumulateurs interchangeables (12) peuvent chacun être insérés individuellement dans un des dispositifs de réception (22) ou extraits du dispositif de réception (22) à travers l'ouverture d'insertion et d'extraction, les modules accumulateurs interchangeables (12) et les dispositifs de réception (22) possédant chaque fois des connecteurs électriques (16, 26) complémentaires, et les modules accumulateurs interchangeables (12) et les dispositifs de réception (22) de l'ensemble batterie étant chaque fois réalisés de manière identique, de sorte que les modules accumulateurs interchangeables (12) peuvent chacun être insérés dans n'importe lequel des dispositifs de réception (22), un dispositif de commande (80), lequel, pendant la conduite, commande sélectivement le prélèvement d'énergie à partir des modules accumulateurs interchangeables (12), de façon que les modules accumulateurs interchangeables (12) soient déchargés successivement individuellement ou par groupes, et un système d'accumulateurs interchangeables modulaire étant ainsi formé dans le véhicule automobile (64), dans lequel les modules accumulateurs interchangeables (12) déchargés sont échangés sélectivement en fonction de leur état de charge respectif ; les automates de charge (120) comprenant chacun : une pluralité de dispositifs de réception (132) pour les modules accumulateurs interchangeables (12), un dispositif de charge pour recharger les modules accumulateurs interchangeables, au moins une ouverture d'insertion et d'extraction (134) pour les modules accumulateurs interchangeables, de sorte que les modules accumulateurs interchangeables (12) peuvent chacun être insérés dans un des dispositifs de réception (132) ou extraits du dispositif de réception à travers l'ouverture d'insertion et d'extraction, les modules accumulateurs interchangeables (12) et les dispositifs de réception (132) possédant chaque fois des connecteurs électriques complémentaires, et les dispositifs de réception (132) de l'automate de charge (120) étant réalisés de manière identique, de sorte que les modules accumulateurs interchangeables (12) peuvent chacun être insérés dans n'importe lequel des dispositifs de réception (132), des moyens (122) qui, en réponse à une procédure de paiement et à l'insertion d'un ou plusieurs modules accumulateurs interchangeables (12) déchargés dans les automates de charge, mettent à disposition automatiquement un même nombre d'autres modules accumulateurs interchangeables (12) chargés du même type pour extraction, **caractérisé en ce qu'**un statut de réserve (10) est attribué à un ou à un groupe de modules accumulateurs interchangeables (12) dans le véhicule (64), et le prélèvement d'énergie est commandé par le dispositif de commande (80) de façon que les modules accumulateurs interchangeables (12) ayant le statut de réserve (10) ne soient déchargés que lorsque les autres (1 - 9) modules accumulateurs interchangeables sont déjà complètement déchargés, l'indicateur d'état de charge émettant un message d'avertissement de réserve lorsque les modules accumulateurs interchangeables ayant le statut de réserve (10) sont déchargés.

14. Système de circulation d'accumulateurs interchangeables selon la revendication 13, dans lequel les automates de charge (120) comprennent chacun un panneau d'utilisateur (122) comprenant un dispositif de paiement et un système de transport et d'ouverture (140, 152) qui transporte automatiquement les modules accumulateurs interchangeables (12) rechargés vers des ouvertures d'extraction et, en réponse à la procédure de paiement et à l'insertion d'un ou plusieurs modules accumulateurs interchangeables (12) déchargés dans l'automate de charge (120) met à disposition automatiquement, simultanément ou successivement, le même nombre de modules accumulateurs interchangeables (12) chargés aux ouvertures d'extraction pour extraction par l'utilisateur, le système de transport et d'ouverture présentant un système de trappes (152) et une pluralité de rouleaux (140) disposés les uns à côté des autres, lesquels présentent chacun sur la face périphérique une pluralité de tubes de réception (133) s'étendant radialement pour les modules accumulateurs interchangeables (12), les rouleaux (140) pouvant tourner indépendamment les uns des autres, des tubes de réception (133) vides étant automatiquement tournés vers les dispositifs d'extraction et les trappes (152) correspondantes ouvertes pour permettre l'insertion des modules accumulateurs interchangeables déchargés, et des tubes de réception (133) équipés étant tournés vers les dispositifs d'extraction et les trappes (152) correspondantes ouvertes pour permettre l'extraction des autres modules accumulateurs interchangeables (12) rechargés.

15. Système de circulation d'accumulateurs interchangeables selon l'une des revendications précédentes 13 ou 14, dans lequel les automates de charge (120) présentent un dispositif de lecture de la mémoire de données (15) des modules accumulateurs interchangeables, dans laquelle le nombre de cycles de charge est chaque fois enregistré, lequel dispositif, en réponse au dépassement d'un nombre prédéterminé de cycles de charge, retire automatiquement de la circulation le module accumulateur interchangeable (12) concerné.
